# EUROPEAN PATENT SPECIFICATION

(11) **EP 1 104 554 B1**
(45) Date of publication and mention of the grant of the patent: **16.03.2011**
(21) Application number: 99939541.1
(22) Date of filing: 12.08.1999
(51) Int. Cl.: G06F 21/02

(54) **IMPROVEMENTS IN AND RELATING TO ELECTRONIC SECURITY DEVICES**
VERBESSERUNGEN IN BEZUG AUF ELEKTRONISCHE SICHERHEITSEINRICHTUNGEN
PERFECTIONNEMENTS APPORTES A DES DISPOSITIFS ELECTRONIQUES DE SECURITE

(30) Priority: 20.08.1998 GB 9818188
(43) Date of publication of application: 06.06.2001
(73) Proprietor: Comodo CA Limited, Trafford Road Salford Manchester M5 3EQ (GB)
(72) Inventor: ABDULHAYOGLU, Melih, Bradford, West Yorkshire BD7 1DQ (GB)
(74) Representative: Brandon, Paul Laurence
(86) International application number: PCT/GB1999/002671
(87) International publication number: WO 2000/011536

(56) References cited:
- EP-A- 0 649 080
- DE-C- 19 549 014
- US-A- 4 882 752
- US-A- 5 189 700
- US-A- 5 355 414

## Description

### Field of the Invention

The present invention relates to electronic security devices and to methods of operation of electronic devices.

### Background to the Invention

Despite the growing proliferation of computer hardware and software, there are still serious problems associated with the security of both of them. Many new problems have arisen and others have become exacerbated as computers have become progressively more portable. One such particular problem is the security of devices themselves against theft.

The disclosure DE-A-195 49 014 (SIEMENS AG) published 20 February 1997 discloses an electronic security device comprising means for receiving and outputting signals when in an authorised use state, means for determining whether a predetermined real time period has expired and, if so, seeking an authorisation, means for verifying the authorisation, and means for configuring the device into an unauthorised use state in the event that a correct authorisation is not received in time.

The present invention aims to provide in preferred embodiments thereof, electronic security devices that address at least some of the problems of the prior art.

### Summary of the Intention

One aspect of the present invention is an electronic security device as defined in independent claim 1. Another aspect of the invention is a method for operating an electronic device as defined in independent claim 15. Further embodiments of the invention are specified in the respective appended dependent claims.

This device provides time-limited security based on a real time measure, not based on the last use of the device.

Suitably, the device is adapted to receive encrypted authorisation codes.

Suitably, the device includes means for generating a random (which expression includes pseudo-random) number and means for encrypting the random number. Suitably, the device includes means for performing a predetermined mathematical operation on the random number. Suitably, the device includes means for encrypting and decrypting data. Suitably, the encryption is according to a public key algorithm.

Suitably, the device additionally comprises a means for periodically checking the real time clock against a predetermined time period. Suitably, the periodic checking means comprises a counter which upon reaching a predetermined number initiates the check and means for re-setting the counter.

Suitably, the device comprises a dedicated power supply. Suitably, the device is embodied in a plug-in module, which plug in module suitably comprises a power source such as a battery.

According to the present invention in a second aspect, there is provided an electronic apparatus comprising a security device according to the first aspect of the invention.

Suitably, the security device is located between an electronic output device and an electronic input device. The output device may, for instance, be a keyboard or a modem. The input device may be a central processing unit, memory unit, video card etc. Suitably, when in an unauthorised use state the device reduces the frequency at which key presses are transmitted to or within the electronic apparatus.

According to the present invention in a third aspect, there is provided a digital electronic computer comprising a security device according to the first aspect of the invention.

Suitably, the authorisation code is encrypted.

Suitably, the device generates a random (which expression includes pseudo-random) number and encrypts the random number. Suitably, the device performs a predetermined mathematical operation on the random number. Suitably, the device encrypts and decrypts data. Suitably, the encryption is according to a public key algorithm.

Suitably the encrypted number is transmitted to a verification station which verification station decrypts the encrypted number and verifies it against a number previously supplied to the electronic device.

According to the present invention in a fifth aspect, there is provided an electronic system adapted and configured to operate according to the method of the fourth aspect of the invention.

### Brief Description of the Figures

The present invention will now be described, by way of example only, with reference to the Figures that follow; in which:

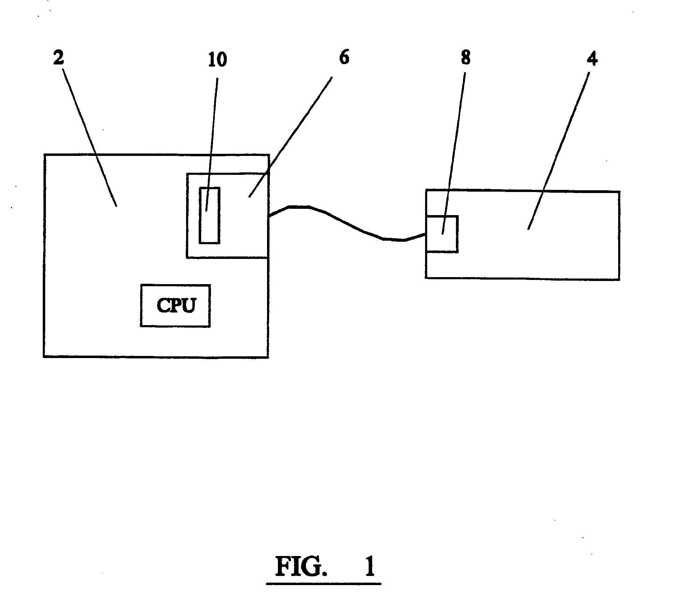

Figure 1 is a schematic illustration of an electronic data processing apparatus embodying the present invention.
Figures 2A-2C are flow diagrams illustrating a mode of operation of the Figure 1 apparatus according to the present invention.
Figures 3A-3E are flow diagrams illustrating more detail of a mode of operation of the Figure 1 apparatus according to the present invention.

### Description of the Preferred Embodiments

In one preferred embodiment of the present invention, there is provided an electronic data processing apparatus, typically a personal computer ("PC") 2. The PC 2 receives input signals from peripheral input devices (eg keyboard, data socket (modem), pen, voice recognition microphone etc). The PC 2 includes a keyboard 4 having an associated keyboard controller 6 and a bus 8 forming an input channel.

A security device 10 is located between the keyboard controller 6 and the bus 8. The device is shown schematically in the control line, but normally it will be located elsewhere, for instance in the body of the PC 2 or keyboard itself. It needs to be in a vital location so that when inactive it renders the equipment it is in useless or at least incapacitates it to some extent. The security device 10 has the following characteristics.
(i) It includes a real-time clock powered by an internal power-supply.
(ii) It includes a fast and reversible (symmetric) encryption/decryption algorithm such as DES or T-code (in ROM - read only memory).
(iii) It has a slower but more secure (asymmetric) public key encryption/decryption algorithm having an associated public key (in ROM). Although referred to as a public key, it will not normally be disclosed.
(iv) It has a volatile memory Random Access Memory (RAM) including authorisation codes or an algorithm therefor, or pre-stored password and means for checking whether an input password or code matches such an authorisation code or password. The RAM is maintained by the power supply.
(v) It has the capacity to perform predetermined mathematical operations (eg in a Z80 processor).

The security device 10 is embodied in a silicon device including a microprocessor (eg a Z80), read only memory, random access memory and a power source such as a battery to provide constant power for the real-time clock. If the power source for the real-time clock is removed the security device 10 will become deactivated. At the manufacturing stage the security device 10 is provided with a unique serial number to differentiate it from other corresponding devices, for instance in ROM, EPROM etc.

Generally, the security device 10 is activated by an activation code. The activation code is provided to the security device 10 encoded using a public key algorithm for high security. If the activation code is not provided on demand the security device 10 will enter an unauthorised use state. The security device 10 is configured so that upon receipt of the correct activation code it is activated for authorised use for a period of time determined according to the activation code, according to the in-built real-time clock. The period of time can be varied based upon the activation code received. While activated, the security device 12 transmits received signals unaltered. When not activated it is in the unauthorised use state and encrypts signals passing therethrough or delays keyboard input strikes. Thus, while in the unauthorised use state the PC 2 cannot understand the output of keyboard 8.

When the predetermined period of operation expires, the security device 10 requests a further activation code for the next period. When requesting a further activation code, the security device 10 identifies itself. The activation code is requested by the user from a central database. The central database checks to determine if a further activation can be approved, for instance it may check to determine whether the device has been reported stolen, rental fees due have been paid etc. If further activation is authorised, the database encrypts the activation code for the next period using the particular security device's public key which is entered into the security device 10. The encrypted activation code normally is provided via electronic means directly to the security device 10, for instance directly by modem or over the internet, but can also be entered manually by the user, via a disk or by local infra red transmitter. Upon receipt of the encrypted activation code, the security device 10 decrypts it and checks it against its pre-stored codes to determine the further predetermined period for which it is to be activated before requiring a further activation code.

Further security can be provided by an additional step of the security device 10 creating a random number which is encrypted according to the particular security devices public key. The encrypted random number is transmitted to the database centre (by whatever method). The database centre decrypts the random number, performs a predetermined mathematical calculation upon it (this could be as simple as to multiply by two or to XOR it with a key) and encrypts the new value with a public key provided (or its own public key) by the centre and sends it back to the security device 10. The security device upon receipt of the information, decrypts it using the relevant public key and compares the figures (after reversing the predetermined calculation or taking it into account). If the figures correspond then the security device 10 is confident it is dealing with the correct database centre and will accept reconfiguration instructions eg re-setting the real time clock.

If a correct activation code is not provided to the security device 10 on demand at the end of the predetermined period it enters an unauthorised use state in which the user is restricted to, say, 8 keystrokes per minute to input subsequent characters etc. Normally, the security device 10 will demand an activation code some time prior to the end of the predetermined period of operation so that any errors or administrative difficulties can be resolved before the enters its unauthorised use state.

The PC 2 may automatically seek an authorisation code, for instance via direct modem or internet access to an authorisation centre, without the user intervening.

Each PC 2 normally will only have one such security device 10, but each such device 10 manufactured has a different public key so each one is unique. Thus, generally each device 10 will output a different signal upon receipt of the same input signal.

The device also provides password verification and can be configured to do this with or without the activation code.

In use, the PC 2 is configured to require a password before permitting access to certain functions or data. By way of example, a word-processing file may be password protected. Before permitting access to the file, the PC Central Processing Unit (CPU) requires confirmation from the security device 10 that the correct password has been entered.

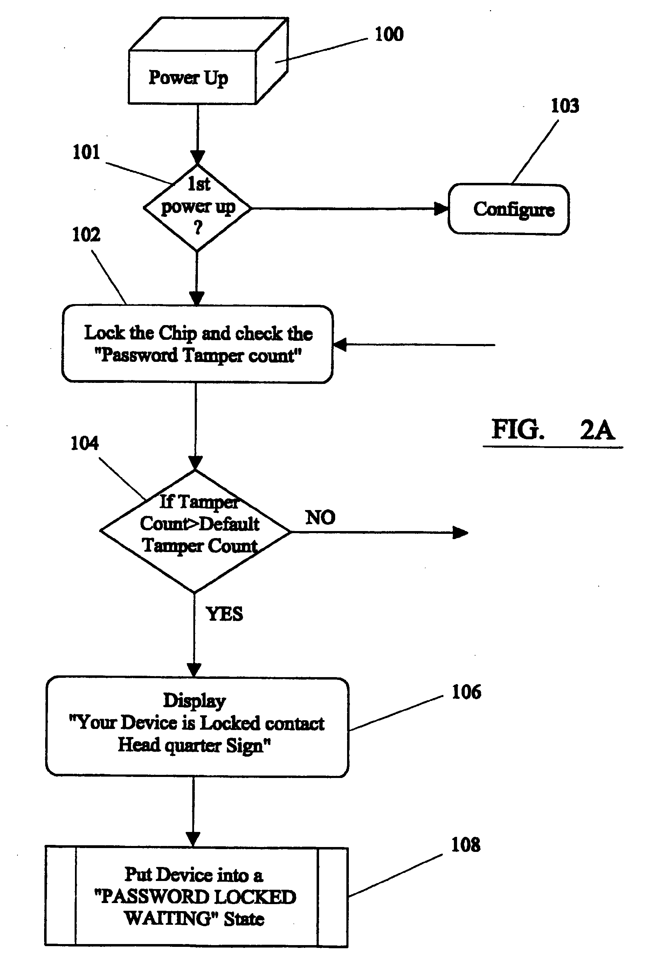

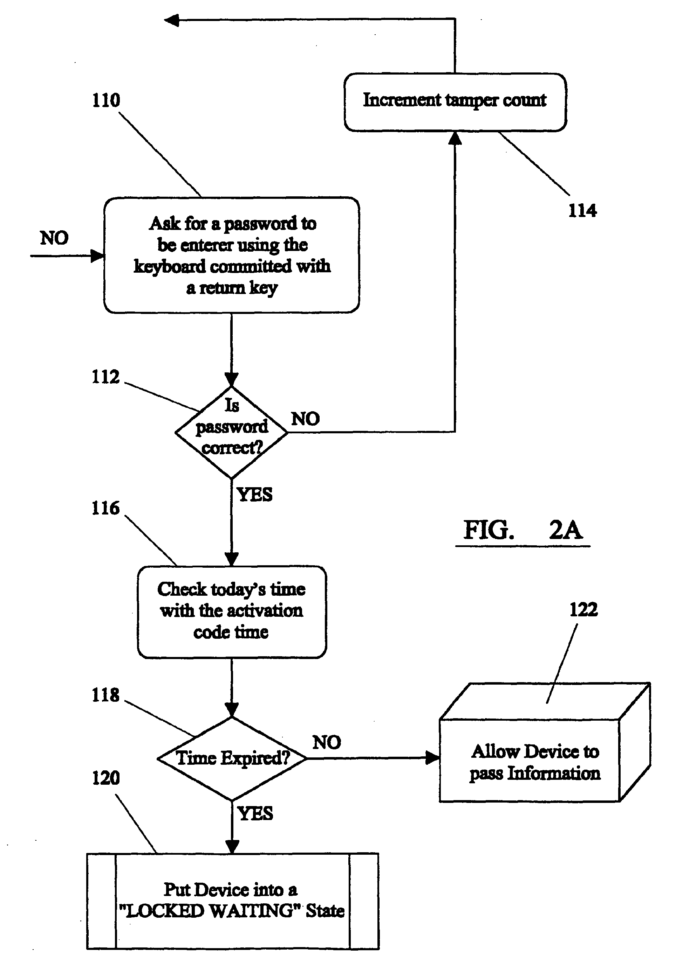

Referring to Figures 2A-2C of the drawings that follow, there is shown in flow diagrams an overview of the operation of the present invention. The flow diagrams show a system configured to require correct password input for operation from power up and when a predetermined time period expires.

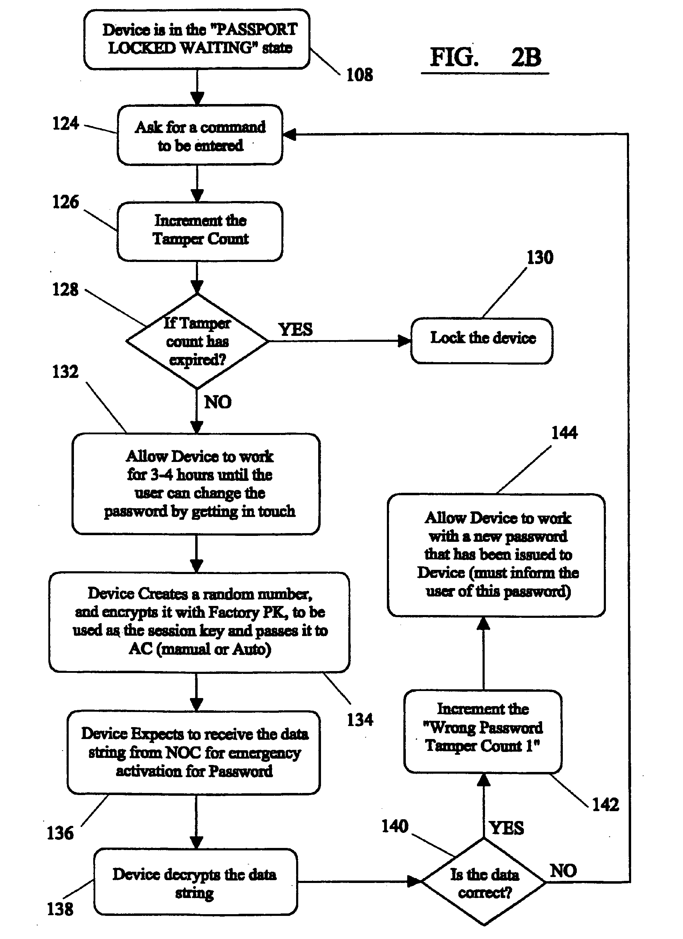

Referring now to Figure 2A, from power up 100 the security device 10 checks (101) a flag to determine whether it is its first power up in which case a configuration setup is initiated (103). In CONFIGURATION the device is allocated its unique public key and the real-time clock is initialised. Other features such as its predetermined mathematical operation, codes for certain time periods, etc can be configured or modified at this time. The user does not know these. When configuration is finished or following the "password tamper count" is checked 102. At 104 if the tamper count is greater than the default tamper count a "LOCKED" message is displayed 106 and the security device 10 is configured into a "PASSWORD LOCKED WAITING" state (see Figure 2B) at 108.

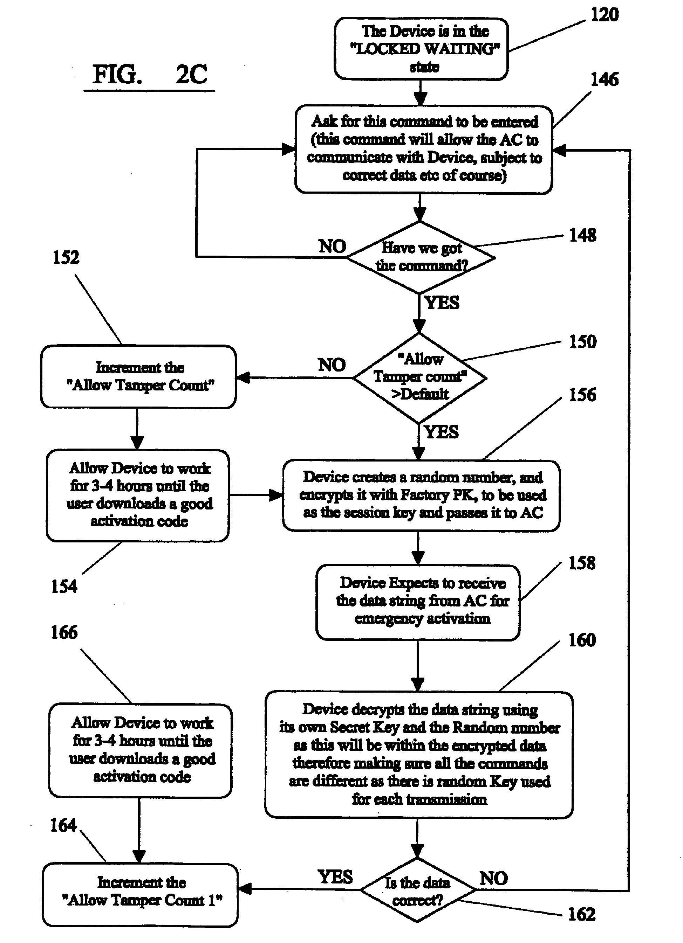

If at 104 the tamper count is less than or equal to the default tamper count a password is requested 110. If at 112 the password is incorrect the tamper count is incremented by one 114. If the password is correct the security device 10 compares the current real time with the time against which activation has been permitted 116. The security device 10 also compares the current real time from its own internal clock/counter with the time for which authorised use has been permitted each time the PC 2 is booked (i.e. typically each time WINDOWS (Registered Trade Mark) is initialised. If at 118 the time has expired, the security device is configured into the "LOCKED WAITING" state 120 (see Figure 2C) but if the time has not expired the information is passed without interruption (122).

Referring to Figure 2B, the "PASSWORD LOCKED WAITING" state is now described. In the "PASSWORD LOCKED WAITING" state a keystroke delay facility is enabled. The keystroke delay facility only allows one keystroke every eight seconds to reach the PC 2. This ensures that inputs needed during boot up, or to enter a password are permitted and predictable, but that the device cannot be used practicably.

In the "PASSWORD LOCKED WAITING" state 108, at 124 the user is required to input a command instructing the PC to communicate with an authorisation centre. At this stage the user can choose manual or automatic communication with the authorisation centre. When the command is entered, the tamper count is incremented (126). If (128) the tamper count has expired the device is locked (130). If the tamper count has not expired, the device is allowed (132) to operate for a further 3-4 hours to enable the verification procedure to be completed.

The security device first creates and encrypts a random (or pseudo-random) number and encrypts it with the embedded public key (134). In 134 "PK" = Public Key and "AC" = Activation Code. The encrypted random number is transmitted to the authorisation centre which may be automatic, for instance via a direct modem or the internet, or manually, for instance by the user phoning up the authorisation centre and entering what they are told via the keyboard. If the user communicates manually, further security can be implemented such as checking the users pre-allocated password etc.

The security device 10 then at 136 enters a waiting state to receive a data string (138) from the network authorisation centre ("NOC") which its decrypts. If the received data is verified (140) the "wrong password tamper count" is incremented (142) and the device is permitted to operate for a further period with a new password that is notified to the user (144). The input from the authorisation centre includes an activation code and a new password encrypted according to the public key of the security device 10. If at 140 there is an error, indicating perhaps an attempted tampering with the device, it returns to the "PASSWORD LOCKED WAITING" state and asks for a command to be entered.

The authorisation centre will only provide the security device 10 with the necessary authorisation code and new password if approved. Approval may depend upon payment of relevant fees to the authorisation centre, checking whether the item of equipment is registered as stolen, or other security checks.

Referring to Figure 2C the security device 10 is in the "LOCKED WAITING" state 120. As this state is indicative of a possible security breach, a higher level of security is adopted.

At 146 the security device 10 requires a command to be entered instructing it to communicate with the authorisation centre via modem (for instance). Upon receipt of the command 148, the tamper count is checked 150. If the tamper count is less than or equal to the DEFAULT valve the ALLOW TAMPER COUNT counter is incremented 152 and the device is authorised 154 to operate for 3-4 hours from then until the user downloads an acceptable activation code. Next, or if at 150 the ALLOW TAMPER COUNT is greater than the default value, at 156 the security device 10 creates a random (or pseudo-random) number which is encrypted using its public key. The encrypted random number is transmitted to the authorisation centre together with an identifier of the security device 10 in question.

The security device 10 then enters 158 a waiting state during which it expects to receive a data string from the authorisation centre for activation. The authorisation centre first checks whether the security device 10 can be authorised for a further period, for instance by checking whether it has been reported stolen or if any monies due are outstanding. If further use can be authorised, the authorisation centre (knowing the public key of the security device 10) decrypts the encrypted random number, performs a predetermined mathematical operation upon it (eg XOR or multiply), re-encrypts the result using the same public key and transmits the encrypted result with an encrypted new authorisation code to the security device 10 as a data string.

Upon receipt 160 of the encrypted data string, the random number is checked 162 (since the security device 10 knows the predetermined mathematical operation undertaken by the authorisation centre) and if verified the ALLOW TAMPER COUNT is incremented by one 164 and the device is authorised (166) for a further 3-4 hours until the user downloads a good activation code.

If the data is incorrect, a communication command is requested 146 once again.

Once in normal operation the device 10 uses a counter to count up to a predetermined value at which point the real-time clock is checked against its memory for authorisation of a further period. After each check the counter is re-set and counts again. Thus, the real-time clock is checked periodically against the permitted time of operation to determine if further authorisation is required.

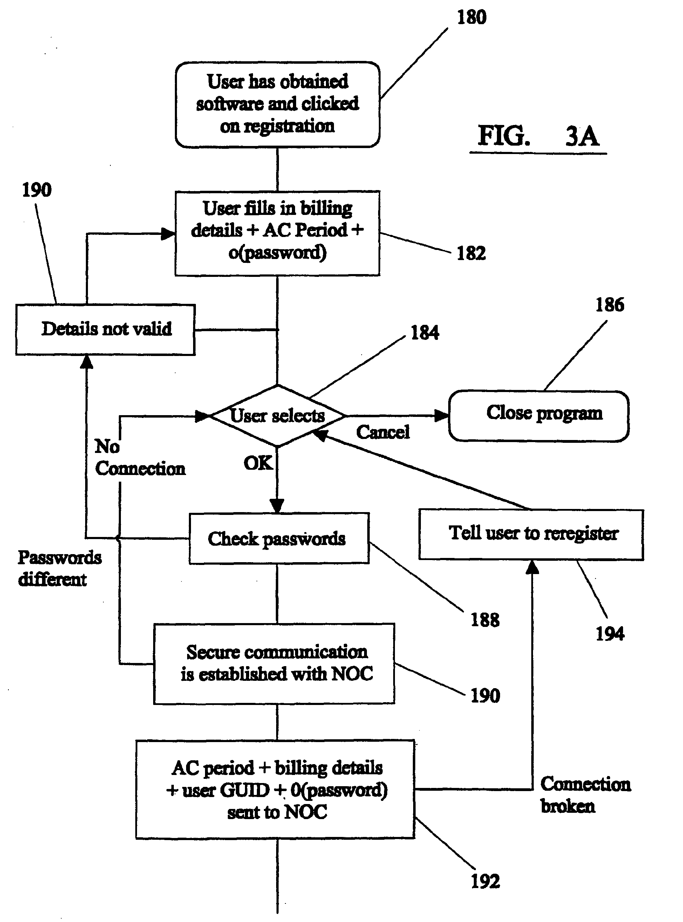

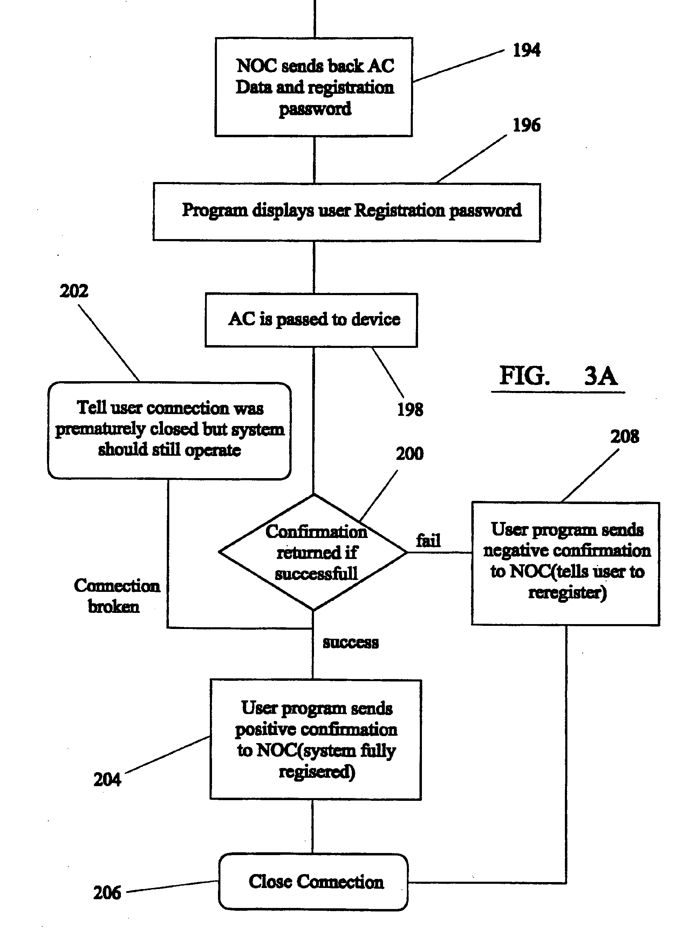

Referring to Figure 3A, once the user has obtained the software package and it has been installed, on screen he or she is invited to register. Having opted to "Register" (180) the security device 10 transmits its identification number to the NOC. The user then (182) fills in their billing details, activation code period and, optionally, their password. At 184 the user is asked to verify their selection by selecting either "OK" or "CANCEL". If "CANCEL" is selected then the program is closed (186). If "OK" is selected the password (if any) is checked (188) with a pre-stored password. If the password is different (190) the system returns to 182. If the password is accepted, secure communication is established with the NOC. If secure communication cannot be established, a message can be displayed to this effect and the system returns to (184). The activation code period, billing details, user Global Unique Identifier ("GUID") and, if used, password are sent to NOC at 192. If for any reason the connection is broken, at 194 the user is informed of this and told to re-register at 184.

Upon receipt of the details from 192 the NOC sends back activation code data and a registration password. The password must be stored safely in case the machine is stolen. The program then displays the user registration password (196) received from the NOC. At 198 the activation code is passed to the security device 10 which check the activation code at 200. If for any reason the connection is broken then at 202 the user is informed that the connection was prematurely closed, but that the system should still operate. If a confirmation of success is indicated, the user program sends positive confirmation to the NOC for a fully registered system (204) and the connection is closed (206). If the device indicates a fail on the activation code the user program sends a negative confirmation to the NOC which tells the user to re-register (208).

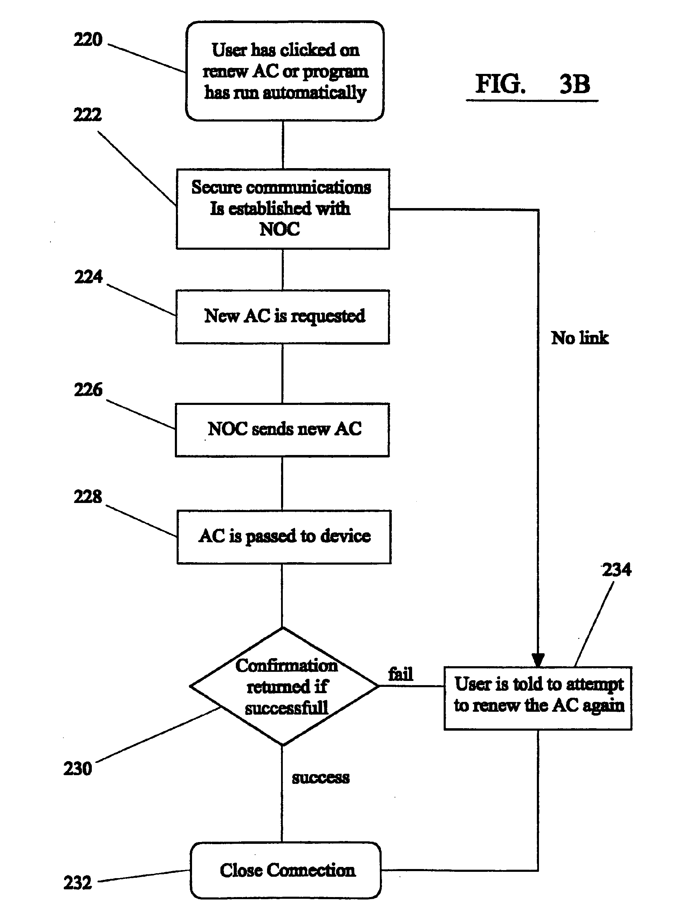

Referring now to Figure 3B, a flow diagram illustrating renewal of an activation code is shown.

At 220 the renewal is initiated either by a user clicking on a "RENEW AC" button or the program running automatically. At 222 a secure communication is established with the NOC. At 224 a new AC is requested which at 226 is sent by the NOC. The new AC is sent to the security device 10 at 228 and if successful (230) confirms this to the NOC and closes the connection (232). If unsuccessful the user is told to attempt to renew the AC again (234) and the connection is closed (232).

If no link can be established with the NOC at 222, the user is told to attempt to renew the activation code again at some future time (234) and the attempted connection is closed (232).

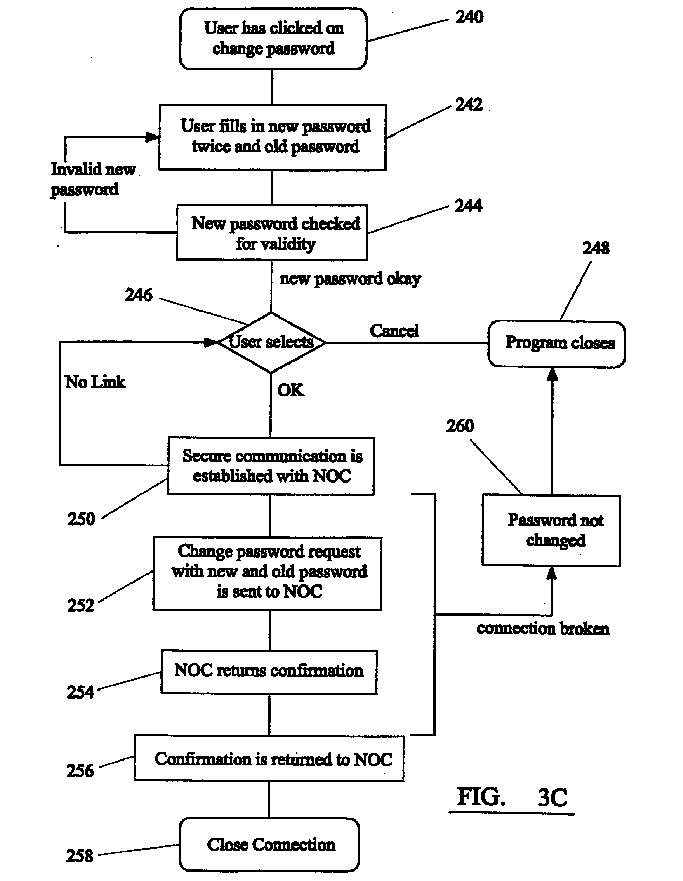

Referring now to Figure 3C, there is shown a flow diagram illustrating the capability of the system to change a password.

At 240 the user clicking on an appropriate "button" initiates the change of password. The user then (242) fills in the new password twice (for validation) and the old password to ensure they are an authorised user. The two new passwords are compared and if not identical are regarded as invalid at 244, so the system returns to 242. If the two new passwords are the same, at 246 the user is invited to verify their selection by choosing either "OK" or "CANCEL". If the user selects "CANCEL" then the program closes at 248. If the user selects "OK", a secure communication link is established with the NOC at 250. If no link can be established then the system returns to 246. At 252 the change password request with the new and old password is sent to the NOC which at 254 returns confirmation to the device 10. Upon receipt of confirmation, at 256 the device re-confirms receipt at 256 and the connection is closed (258). If for any reason the connection between the device 10 and NOC is broken, the password is not changed (260) and the program closes.

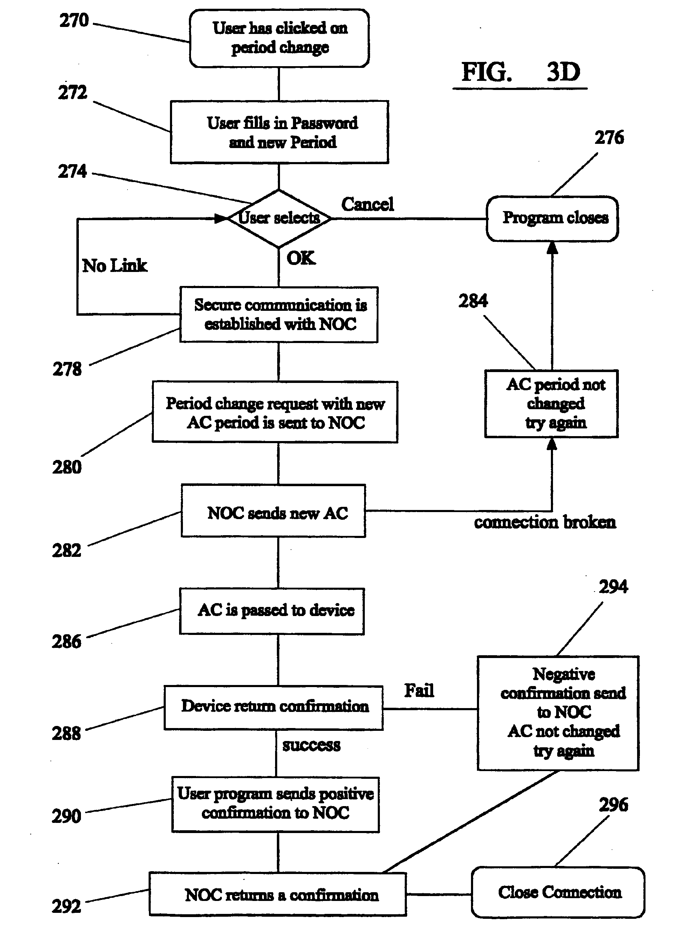

Referring now to Figure 3D, there is a flow diagram showing how a user can change their activation code period.

Once the user clicks to indicate they wish a period change at 270, they are required to fill in their password (if one is used) and the new period required at 272. The user is then invited to verify their choice by selecting either "OK" or "CANCEL" at 274. If "CANCEL" is selected the program closes at 276. If "OK" is selected a secure communication link is established with the NOC at 278. If no link can be established, the system returns to 274.

Upon a secure communication being established (278) the period change request with new activation code period is sent to the NOC at 280. The NOC then at 282 sends the new activation code back. If for any reason the connection is broken the activation code period is not changed and a try again signal is given at 284. The program then closes (276). Upon receipt of the new activation code, it is passed to the security device 10 at 286. The security device 10 then checks the activation code. If acceptable (success) the user program then sends a positive confirmation to the NOC at 290 and the NOC returns a confirmation at 292. If at 288 the device returns a fail message, negative confirmation is sent to the NOC, the activation code is not changed and a try again signal is given (294). After the NOC returns a confirmation, the connection is closed at 296.

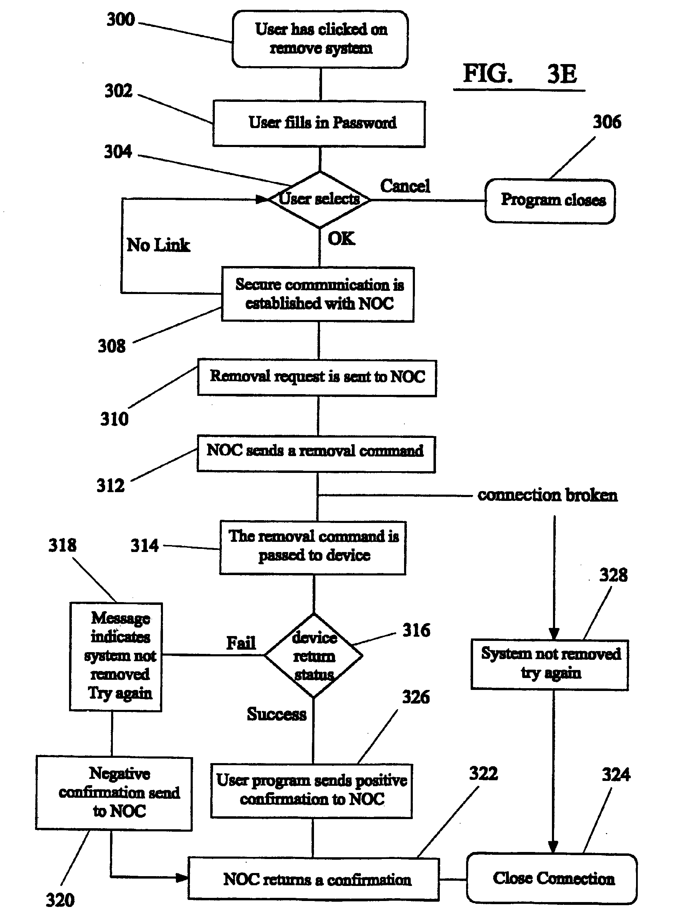

Referring now to Figure 3E, a flow diagram is shown illustrating how the system can be removed, starting from a remove system button at 300.

The user first fills in their password at (302) following which they are requested to verify their choice by selecting either "OK" or "CANCEL" (304). If "CANCEL" is selected the program closes (306). If "OK" is selected, a secure communication link is established with NOC (308). If no link can be established, the system returns to (304). Upon a secure link being established, the removal request is sent to NOC (310) following which the NOC (312) sends a removal command to the device 10. The removal command is passed to the device (10) at 314 which is then checked at 316 for validity. If the validity check is failed a message is given indicating that the system has not been removed and inviting the user to try again (318) and a negative confirmation is sent to NOC (320) following which the NOC returns a confirmation (322) and the connection is closed (324). If the validity check indicates a success, the user program sends confirmation to the NOC (326), the NOC returns a confirmation at (322) and the connection is closed at (324). If for any reason the connection with the NOC is broken, a message is displayed indicating that the system has not been removed and inviting the user to try again (328) and the connection is closed (324).

Further embodiments of the present invention provide the security device 12 before a hard disk or other memory device in a PC architecture.

In this mode, the device encrypts signals input to the hard disk or other memory device and decrypts signals output from the same. This makes theft of data from the hard disk or other memory device harder, especially when the mode is combined with the feature described below. We refer to this as Auto-Encrypt On Demand Decrypt (AEODD).

The device can be placed before any essential integer of the PC, such as the hard disk, the CPU, the video card etc and configured so that it will only operate upon periodic receipt of an authorisation code. When correctly activated the device onwards transmits received signals. If in an unauthorised use state it can block received signals. Alternatively, in the case of a memory device, encryption and decryption can be provided. However, these alternatives do not fall within the scope of the invention as claimed.

In each case, the provision of the device means that unless it is correctly activated the PC cannot properly be used. For instance, in the case of the hard disk option, everything that is written to the hard disk is encrypted (providing additional security to the data on the disk) using the fast encryption algorithm and everything read from it is decrypted by the device. The decryption only occurs if the device is activated in an authorised use state so if the PC is stolen, then when the permitted time period expires no further authorisation can be obtained (with the assumption that the PC has been reported as stolen), so in effect it will become inoperative. Since activation relies on the public key encryption code, it is relatively secure. Equally, if the device precedes the CPU or video card, if it becomes deactivated, the PC is inoperative.

Although reference is made herein to a "password", that can comprise any signal or combination of signals and need not be a "word" at all.

It will be appreciated by those skilled in the art that the device can be located in other positions or, preferably, incorporated integrally within an essential element of the PC.

In a preferred embodiment of the present invention a microprocessor security device is provided with a real-time clock on a PC motherboard at a vital point, such as prior to the CPU, the video card, the hard disk etc. When correctly activated for authorised use, the device receives and outputs received signals. The device remains activated for a predetermined period of time. Upon or just prior to expiry of the predetermined period, the device seeks an authorisation code that can be input to it in any of the known ways. If a correct authorisation code is not entered, the device is set to an unauthorised use state and no longer properly outputs received signals. Thus a periodic authorisation code is required to keep the security device, and hence the PC, operational.

In preferred embodiments, the authorisation code is provided in encrypted form and, if desired, a further authentication step can be carried out.

The invention is applicable to any electronic apparatus. Although the present invention is described in relation to a PC, it will be appreciated that in relation to the periodic activation code feature it can find application in any electronic apparatus, for instance a video camera, lap top computer, mobile telephone etc.

## Claims

1. An electronic security device (10) comprising means for receiving and outputting signals when in an authorised use state, a real time clock for determining whether a predetermined real time period has expired and, if so, seeking an authorisation, means for verifying the authorisation, and means for configuring the device into an unauthorised use state in the event that a correct authorisation is not received in time; **characterised in that** the device comprises means whereby when in an unauthorised use state, the device reduces the frequency at which inputs are transmitted to an input receiver.

2. An electronic device (10) according to claim 1, in which the device is adapted to receive encrypted authorisation codes.

3. An electronic device (10) according to any preceding claim, in which the device includes means for generating a random (which expression includes pseudo-random) number and means for encrypting the random number.

4. An electronic device (10) according to claim 3, in which the device includes means for performing a predetermined mathematical operation on the random number.

5. An electronic device (10) according to claim 3 or claim 4, in which the device includes means for encrypting and decrypting data.

6. An electronic device according to claim 5, in which the encryption is according to a public key algorithm.

7. An electronic device according to any preceding claim, in which the device additionally comprises a means for periodically checking the real time clock against a predetermined time period.

8. An electronic device according to claim 7, in which the periodic checking means comprises a counter which upon reaching a predetermined number initiates the check and means for re-setting the counter.

9. An electronic device (10) according to any preceding claim, in which the device comprises a dedicated power supply.

10. An electronic device (10) according to claim 9, in which the device is embodied in a plug-in module, which plug in module suitably comprises a power source such as a battery.

11. An electronic apparatus (2) comprising a security device (10) according to any one of claims 1 to 10.

12. An electronic apparatus (2) according to claim 11, in which the security device (10) is located between an electronic output (4, 8) device and an electronic input device (6).

13. An electronic apparatus (2) according to claim 12, in which when in an unauthorised use state the device reduces the frequency at which key presses are transmitted to or within the electronic apparatus.

14. A digital electronic computer (2) comprising a security device (10) according to any one of claims 1 to 10.

15. A method of operating an electronic device (10) comprising a security device which receives output signals when in an authorised use state, the method comprising the steps of using a real time clock to determine whether a predetermined real time period has expired and, if so, seeking an authorisation, checking whether the authorisation is acceptable and configuring the device in an unauthorised use state in the event that a correct authorisation is not received in time; **characterised in that** when in an unauthorised use state, the device reduces the frequency at which inputs are transmitted to an input receiver.

16. A method according to claim 15, in which the authorisation code is encrypted.

17. A method according to any one of claims 15 and 16, in which the device (10) generates a random (which expression includes pseudo-random) number and encrypts the random number.

18. A method according to claim 17, in which the device (10) performs a predetermined mathematical operation on the random number.

19. A method according to claim 17 or claim 18, in which the device (10) encrypts and decrypts data.

20. A method according to claim 19, in which the encryption is according to a public key algorithm

21. A method according to claim 19 or claim 20, in which the encrypted number is transmitted to a verification station which verification station decrypts the encrypted number and verifies it against a number previously supplied to the electronic device (10).

22. An electronic system adapted and configured to operate according to any one of claims 15 to 21.

## Patentansprüche

1. Elektronische Sicherheitsvorrichtung (10) mit Mitteln zum Empfangen und Ausgeben von Signalen, wenn sie sich in einem Zustand autorisierter Benutzung befindet, einem Echtzeittakt zum Bestimmen, ob ein vorbestimmter Echtzeitraum abgelaufen ist, und zum Ersuchen um eine Autorisierung, wenn dem so ist, Mitteln zum Verifizieren der Autorisierung und Mitteln zum Konfigurieren der Vorrichtung zu einem Zustand unautorisierter Benutzung, falls nicht rechtzeitig eine korrekte Autorisierung empfangen wird; **dadurch gekennzeichnet, dass** die Vorrichtung Mittel umfasst, wodurch, wenn sie sich in einem Zustand unautorisierter Benutzung befindet, die Einrichtung die Häufigkeit verringert, mit der Eingaben zu einem Eingangsempfänger gesendet werden.

2. Elektronische Vorrichtung (10) nach Anspruch 1, wobei die Vorrichtung dafür ausgelegt ist, verschlüsselte Autorisierungscodes zu empfangen.

3. Elektronische Vorrichtung (10) nach einem der vorhergehenden Ansprüche, wobei die Vorrichtung Mittel zum Erzeugen einer zufälligen (wobei der Ausdruck pseudozufällig umfasst) Zahl und Mittel zum Verschlüsseln der zufälligen Zahl umfasst.

4. Elektronische Vorrichtung (10) nach Anspruch 3, wobei die Vorrichtung Mittel zum Ausführen einer vorbestimmten mathematischen Operation an der zufälligen Zahl umfasst.

5. Elektronische Vorrichtung (10) nach Anspruch 3 oder Anspruch 4, wobei die Vorrichtung Mittel zum Verschlüsseln und Entschlüsseln von Daten umfasst.

6. Elektronische Vorrichtung nach Anspruch 5, wobei die Verschlüsselung gemäß einem Public-Key-Algorithmus erfolgt.

7. Elektronische Vorrichtung nach einem der vorhergehenden Ansprüche, wobei die Vorrichtung zusätzlich ein Mittel zum periodischen Vergleichen des Echtzeittakts mit einem vorbestimmten Zeitraum umfasst.

8. Elektronische Vorrichtung nach Anspruch 7, wobei das Mittel zum periodischen Vergleichen einen Zähler, der beim Erreichen einer vorbestimmten Zahl den Vergleich einleitet, und Mittel zum Zurücksetzen des Zählers umfasst.

9. Elektronische Vorrichtung (10) nach einem der vorhergehenden Ansprüche, wobei die Vorrichtung eine eigene Stromversorgung umfasst.

10. Elektronische Vorrichtung (10) nach Anspruch 9, wobei die Vorrichtung in einem Einsteckmodul realisiert ist, wobei das Einsteckmodul geeigneterweise eine Stromquelle, wie zum Beispiel eine Batterie, umfasst.

11. Elektronisches Gerät (2), das eine Sicherheitsvorrichtung (10) nach einem der Ansprüche 1 bis 10 umfasst.

12. Elektronisches Gerät (2) nach Anspruch 11, wobei sich die Sicherheitsvorrichtung (10) zwischen einer Vorrichtung zur elektronischen Ausgabe (4, 8) und einer elektronischen Eingabevorrichtung (6) befindet.

13. Elektronisches Gerät (2) nach Anspruch 12, wobei die Vorrichtung, wenn sie sich in einem Zustand unautorisierter Benutzung befindet, die Häufigkeit verringert, mit der Tastenbetätigungen zu oder in dem elektronischen Gerät gesendet werden.

14. Digitaler elektronischer Computer (2), der eine Sicherheitsvorrichtung (10) nach einem der Ansprüche 1 bis 10 umfasst.

15. Verfahren zum Betrieb einer elektronischen Vorrichtung (10), die eine Sicherheitsvorrichtung umfasst, die Ausgangssignale empfängt, wenn sie sich in einem Zustand autorisierter Benutzung befindet, wobei das Verfahren die folgenden Schritte umfasst: Verwenden eines Echtzeittakts, um zu bestimmen, ob ein vorbestimmter Echtzeitraum abgelaufen ist, und Ersuchen um eine Autorisierung, wenn dem so ist, Prüfen, ob die Autorisierung annehmbar ist und Konfigurieren der Vorrichtung in einem Zustand unautorisierter Benutzung, falls nicht rechtzeitig eine korrekte Autorisierung empfangen wird; **dadurch gekennzeichnet, dass**, wenn sie sich in einem Zustand unautorisierter Benutzung befindet, die Einrichtung die Häufigkeit verringert, mit der Eingaben zu einem Eingangsempfänger gesendet werden.

16. Verfahren nach Anspruch 15, wobei der Autorisierungscode verschlüsselt ist.

17. Verfahren nach einem der Ansprüche 15 und 16, wobei die Vorrichtung (10) eine zufällige (wobei der Ausdruck pseudozufällig umfasst) Zahl erzeugt und die zufällige Zahl verschlüsselt.

18. Verfahren nach Anspruch 17, wobei die Vorrichtung (10) eine vorbestimmte mathematische Operation an der zufälligen Zahl ausführt.

19. Verfahren nach Anspruch 17 oder Anspruch 18, wobei die Vorrichtung (10) Daten verschlüsselt und entschlüsselt.

20. Verfahren nach Anspruch 19, wobei die Verschlüsselung gemäß einem Public-Key-Algorithmus erfolgt.

21. Verfahren nach Anspruch 19 oder Anspruch 20, wobei die verschlüsselte Zahl zu einer Verifikationsstation gesendet wird, wobei die Verifikationsstation die verschlüsselte Zahl entschlüsselt und sie mit einer zuvor der elektronischen Vorrichtung (10) zugeführten Zahl vergleicht.

22. Elektronisches System, das dafür ausgelegt und konfiguriert ist, gemäß einem der Ansprüche 15 bis 21 zu arbeiten.

## Revendications

1. Dispositif électronique de sécurité (10) comprenant un moyen pour recevoir et délivrer des signaux lorsqu'il se trouve dans un état d'utilisation autorisée, une horloge temps réel pour déterminer si une période de temps réel prédéterminée s'est écoulée et, si cela est le cas, rechercher une autorisation, un moyen pour vérifier l'autorisation, et un moyen pour configurer le dispositif afin de le faire passer dans un état d'utilisation non autorisée dans le cas où une autorisation correcte n'a pas été reçue à temps ; **caractérisé en ce que** le dispositif comprend un moyen à l'aide duquel, lorsqu'il est dans un état d'utilisation non autorisée, le dispositif réduit la fréquence à laquelle des entrées sont transmises à un récepteur d'entrée.

2. Dispositif électronique (10) selon la revendication 1, dans lequel le dispositif est apte à recevoir des codes d'autorisation cryptés.

3. Dispositif électronique (10) selon l'une quelconque des revendications précédentes, dans lequel le dispositif comprend un moyen pour générer un nombre aléatoire (cette expression couvrant le terme de pseudo-aléatoire) et un moyen pour crypter le nombre aléatoire.

4. Dispositif électronique (10) selon la revendication 3, dans lequel le dispositif comprend un moyen pour effectuer une opération mathématique prédéterminée sur le nombre aléatoire.

5. Dispositif électronique (10) selon la revendication 3 ou la revendication 4, dans lequel le dispositif comprend un moyen pour crypter et décrypter des données.

6. Dispositif électronique selon la revendication 5, dans lequel le cryptage s'effectue conformément à un algorithme à clé publique.

7. Dispositif électronique selon l'une quelconque des revendications précédentes, dans lequel le dispositif comprend en outre un moyen pour vérifier périodiquement l'horloge temps réel par comparaison à une période de temps prédéterminée.

8. Dispositif électronique selon la revendication 7, dans lequel le moyen de vérification périodique comprend un compteur qui, lorsqu'il atteint un nombre prédéterminé, déclenche la vérification et un moyen de réinitialisation du compteur.

9. Dispositif électronique (10) selon l'une quelconque des revendications précédentes, dans lequel le dispositif comprend une alimentation électrique dédiée.

10. Dispositif électronique (10) selon la revendication 9, dans lequel le dispositif est mis en oeuvre dans un module enfichable, lequel module enfichable comprend de manière appropriée une source d'alimentation électrique telle qu'une batterie.

11. Appareil électronique (2) comprenant un dispositif de sécurité (10) selon l'une quelconque des revendications 1 à 10.

12. Appareil électronique (2) selon la revendication 11, dans lequel le dispositif de sécurité (10) est placé entre un dispositif électronique de sortie (4, 8) et un dispositif électronique d'entrée (6).

13. Appareil électronique (2) selon la revendication 12, dans lequel, lorsqu'il est dans un état d'utilisation non autorisée, le dispositif réduit la fréquence à laquelle des actionnements de touches sont transmis à ou dans l'appareil électronique.

14. Calculateur électronique numérique (2) comprenant un dispositif de sécurité (10) selon l'une quelconque des revendications 1 à 10.

15. Procédé de mise en fonctionnement d'un dispositif électronique (10) comprenant un dispositif de sécurité qui reçoit des signaux de sortie lorsqu'il est dans un état d'utilisation autorisée, le procédé comprenant les étapes consistant à utiliser une horloge temps réel pour déterminer si une période de temps réel prédéterminée s'est écoulée et, si cela est le cas, rechercher une autorisation, vérifier si l'autorisation est acceptable et configurer le dispositif dans un état d'utilisation non autorisée dans le cas où une autorisation correcte n'a pas été reçue à temps ; **caractérisé en ce que** lorsqu'il est dans un état d'utilisation non autorisée, le dispositif réduit la fréquence à laquelle des entrées sont transmises à un récepteur d'entrée.

16. Procédé selon la revendication 15, dans lequel le code d'autorisation est crypté.

17. Procédé selon l'une quelconque des revendications 15 et 16, dans lequel le dispositif (10) génère un nombre aléatoire (cette expression couvrant le terme de pseudo-aléatoire) et crypte le nombre aléatoire.

18. Procédé selon la revendication 17, dans lequel le dispositif (10) effectue une opération mathématique prédéterminée sur le nombre aléatoire.

19. Procédé selon la revendication 17 ou la revendication 18, dans lequel le dispositif (10) crypte et décrypte des données.

20. Procédé selon la revendication 19, dans lequel le cryptage s'effectue conformément à un algorithme à clé publique.

21. Procédé selon la revendication 19 ou la revendication 20, dans lequel le nombre crypté est transmis à une station de vérification, laquelle station de vérification décrypte le nombre crypté et le vérifie par comparaison à un nombre précédemment fourni au dispositif électronique (10).

22. Système électronique conçu et configuré pour fonctionner selon l'une quelconque des revendications 15 à 21.
